# EUROPEAN PATENT SPECIFICATION

(11) **EP 3 337 174 B1**
(45) Date of publication and mention of the grant of the patent: **07.04.2021**
(21) Application number: 16382599.5
(22) Date of filing: 14.12.2016
(51) Int. Cl.: H04N 21/44

(54) **METHOD AND DEVICE FOR TRANSMISSION OF CONTENT**
VERFAHREN UND VORRICHTUNGEN ZUR ÜBERTRAGUNG VON INHALTEN
PROCÉDÉ ET DISPOSITIF POUR LA TRANSMISSION D'UN CONTENU

(43) Date of publication of application: 20.06.2018
(73) Proprietor: Alcatel-Lucent España, 28050 Madrid (ES)
(72) Inventor: PEREZ GARCIA, Pablo, 28050 Madrid (ES); RUIZ ALONSO, Jaime, 28050 Madrid (ES); VILLEGAS NUÑEZ, Alvaro, 28050 Madrid (ES)
(74) Representative: Nokia EPO representatives

(56) References cited:
- EP-A1- 2 700 200
- EP-A1- 2 941 001
- EP-A2- 2 693 767
- WO-A2-00/20976
- US-A1- 2004 227 856
- US-A1- 2007 107 026
- US-A1- 2007 160 128
- US-A1- 2013 148 940
- US-A1- 2014 241 415
- US-A1- 2015 016 804
- US-A1- 2015 092 109
- US-B1- 9 232 249

## Description

### FIELD OF THE INVENTION

The present invention relates to the field of telecommunication. In particular, the present invention relates to methods and devices for transmission of multimedia content.

### BACKGROUND

All data transport mechanisms introduce a delay in the transmission of the information. In IPTV video delivery platforms, the live lag, that is the time between when the audio and video were captured and when they are displayed on the user device, may be of the order a few seconds. In Over the Top scenario providing video service with Adaptive Bitrate, the live lag may be of the order of tens of seconds or even more than a minute. In most cases, however, a long live lag is not a real problem: watching a news program or a concert one minute later than when they were transmitted is not a disadvantage. The main issue arises with sports, in particular when the same event is being transmitted through other chains with a significantly lower lag: nobody wants to "hear" a football score (in the radio or simply from neighbors) one minute before it appears on the screen. While this is only a very specific use case, its commercial importance makes the live lag a very relevant parameter to be optimized in video delivery platforms.

The live lag in a video delivery platform can be reduced by minimizing the lag introduced by each element in the chain: encoding delay, ABR segmentation delay, buffering at server, propagation delay (routers, CDNs, access network, etc.) and, very important, buffering at the client device. When all these delays are minimized the video and audio displayed are as close to the real live event as it is possible.

Fast channel change techniques improve quality of experience by reducing the "zapping" time, but typically increase the buffering at the client device and thus the live lag. A known solution for reducing the live lag after a fast channel change comprises reducing buffering at the client device by temporarily playing the received content faster than real time, e.g. by skipping frames. However, this may reduce quality of the displayed content.

US 2007/107026 A1, relates to techniques for fast channel change in digital video networks that are capable of distributing digital video content via multicasting and unicasting.

EP2941001 describes the removal of selected frames from a video stream.

### SUMMARY

It is thus an object of embodiments of the present invention to propose methods and devices for transmission of content, which do not show the inherent shortcomings of the prior art.

The scope of protection of the present invention is as defined in the appended claims.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of media content,
Figures 2 and 3 are flowcharts of methods used in the system of Figure 1, and
Figure 4 is a structural view of a content transmission device.

### DESCRIPTION OF EMBODIMENTS

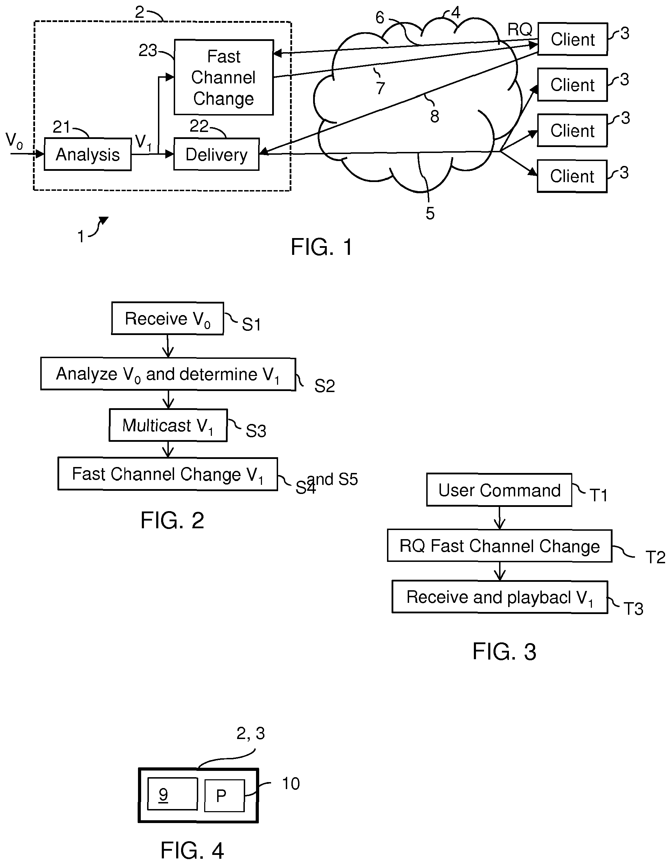

**Figure 1** is a block diagram of a system 1 for transmission of media content. The system 1 comprises a content transmission device 2 and a plurality of content consumption devices 3 connected by a network 4. The system 1 is configured for transmission of one or more media streams, for example a plurality of television channels, from the content transmission device 2 to the content consumption devices 3.

The content transmission device 2 is for example a head end in the video platform of an IPTV operator. The content transmission device 2 comprises an analysis module 21, a delivery module 22 and a Fast Channel Change module 23.

The content transmission device 2 obtains one or more media streams to be transmitted to the client consumption devices 3. A media stream may be for example a video and/or an audio stream, and comprises successive frames. For example, a video stream comprises successive video frames and an audio stream comprises successive audio frames. A video stream may include intra-coded frames (e.g. I-frames) and inter-coded frames (e.g. P and/or B frames). A media stream may be obtained from an external content provider, for example the producer of a television channel. Figure 1 illustrates a media stream V₀ received by the content transmission device 2 and the functioning of the content transmission device 2 is described hereafter with reference to the media stream V₀.

The analysis module 21 analyses the media stream V₀ and selects frames of the media stream V₀ which meet a selection criterion. This includes video frames and/or audio frames. The analysis module 21 determines marking data which specifies the selected frames. The analysis module 21 may generate a media stream V₁ by combining the media stream V₀ and the marking data. For example, in the media stream V₁, each frame header includes a field specifying whether the frame has been selected or not, and the case may be additional information.

The selection criteria for selecting a frame are chosen in order to minimize the perception effect of skipping the selected frames during playback of the media stream V₁. For video, the selection criterion includes, at least one of:
- Selecting very dark scenes. This can be analyzed with a fairly simple calculation on the frame luminance.
- Selecting still scenes: if there are many consecutive frames with no motion at all a frame (or more) can be safely removed. Note this should be zero move; skipping a frame from a slow (or even very slow) motion scene may produce a very bad effect. The motion vectors used in the encoding process may be of help to detect this kind of scenes.
- Selecting very fast scenes: when consecutive frames are very different due to source content containing fast scenes the effect of skipping a frame is less noticeable. Again, the encoding parameters may help detecting this scenario.
- Selecting scene change: skipping frames at the end or the beginning of a sequence may be done in some cases without noticeable effect, but that also depends on the surrounding frames before and after, so the analysis is a bit more complex.

For audio, the selection criterion includes selecting intervals of silence or quasi-silence.

The delivery module 22 transmits the media stream V₁ by multicast to a plurality of content consumption devices 3 currently watching this television channel. The delivery module 22 manages a multicast tree 5 from the content transmission device 2 to the content consumption devices 3.

The Fast Channel Change module 23 implements a Fast Channel Change technique (also refer to as Fast Start technique). For this, the Fast Channel Change module 23 buffers a recent portion of the media stream V₁.

A content consumption device 3 is a device operated by a user for playback of a media stream received from the content transmission device 2, such as a Set-Top-Box, a TV, a personal computer, a tablet, a smartphone... The content consumption device 3 may join a multicast tree 5 associated with the desired media stream. The content consumption device 3 buffers the received media stream V₁ in a receiving buffer and plays back the content from the receiving buffer. The receiving buffer allows absorbing jitter and bandwidth fluctuation in the network 4, but introduce a delay which results in live lag in case of a television channel transmitting a live event, for example a sport game.

When changing from a media stream to another (typically zapping between television channels in response to a user command), a content consumption device 3 interacts with the Fast Channel Change module 23 to implement a Fast Channel Change technique. For this, the content consumption device 3 sends a channel change request RQ (arrow 6) to the content transmission device 2. In response to the request RQ, the Fast Channel Change module 23 sends a buffered portion of the media stream V₁. The buffered portion of the media stream V₁ is sent in a burst (arrow 7), that is at a retrieval rate faster than consumption rate, and starts with a key frame (for example an intra-coded video frame) located in the past with respect to the transmission of the multicast tree 5. This allows the content consumption device 3 to start playing the media stream V₁ without having to wait for the first key frame of the multicast tree 5. However, this increases the size of the receiving buffer and thus the live lag. The content consumption device 3 also joins the multicast tree 5 of the new media stream V₁ (arrow 8).

After a fast channel change, the content consumption device 3 reduces the receiving buffer by skipping frames during the decoding and playback, based on the marking data included in the media stream V₁. Since the frames specified by the marking data have been selected based on the selection criteria mentioned above, skipping the selected frames during decoding/playback does not significantly reduce Quality of Experience. Skipping selected media frames is continued until the receiving buffer reaches a specified threshold value.

The content consumption device 3 may skip video frames and audio frames independently of each other. This allows starting skipping video frames as soon as a selected video frame is received when playback starts and, whenever sound level is low enough, also audio frames. However, this may result in lip-sync issues. Thus, the content consumption device 3 may play selected video frame in response to determining that lip-sync has reach an unacceptable value, until enough selected audio frames can be skipped to reduce the lip-sync issues (or the other way around).

In the system 1, the use of a fast start of fast channel change technique improve the Quality of Experience by reducing the time between a user command and the start of the playback of a desired media stream. Moreover, live lag after such fast start of fast channel change technique is reduced by skipping frames. Since the skipped frame have been selected based on selection criteria chosen to reduce the perceptual impact of skipping, undesirable visual or audio effects may be avoided or reduced.

**Figure 2** is a flowchart of a method for transmission of media content, executed by the content transmission device 2.

The content transmission device 2 receives a media stream V₀ (step S1) and determines the media stream V₁ (step S2) by content-aware analysis and marking the selected frames.

The content transmission device 2 transmits the media stream V₁ to a plurality of content consumption devices 3 by multicast (step S3). In response to a request from a content consumption device 3, the content transmission device 2 sends a buffered portion of the media stream V₁ to content consumption device 3 (steps S4 and S5).

Steps S1 to S5 are illustrated as consecutive steps, but they may be executed in parallel or in another order.

**Figure 3** is a flowchart of a method for consumption of media content, executed by a content consumption device 3.

In response to a user command (step T1), the content consumption device 3 interacts with the content transmission device 2 (step T2) to implement a Fast Channel Change technique and starts receiving and buffering the requested media stream V₁. Then, the content consumption device 3 decodes and plays back the buffered media stream V₁ (step T3), while skipping frames specified by the marking data.

Steps T1 to T3 are illustrated as consecutive steps, but they may be executed in parallel or in another order.

In another embodiment, the content transmission device 2 is a video platform of an Over The Top video service provider, and may not include the Fast Channel Change module 23. The media stream V₁ is sent to content consumption devices 3 by using an Adaptive Bitrate technique, for example DASH. This introduce a buffering delay at the content consumption device 3. A content consumption device 3 reduces the buffering delay by skipping the specified frames.

**Figure 4** is a structural view of device, which may be the content transmission device 2 or a content consumption device 3. The device of Figure 4 comprises a processor 9 and a memory 10. The memory 10 stores a computer program P which, when executed by the processor 9, causes the device to execute the method described above with reference to Figure 2 or 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of media content, executed by a content transmission device (2), comprising:
- obtaining (S1) a media stream (V₀) comprising a plurality of successive frames, **characterized by**:
- selecting (S2) one or more of said frames which meet a selection criterion, wherein the media stream comprises successive video frames, the method comprising at least one of:
- selecting a video frame having a luminance below a luminance threshold,
- selecting a video frame of a still scene,
- selecting a video frame of a changing scene,
- selecting a video frame of a scene change, and/or
wherein the media stream comprises successive audio frames, the method comprising selecting an audio frame having a sound level below a sound level threshold,
- determining (S2) marking data specifying the selected frames,
- sending (S3) said media stream and said marking data to a plurality of content consumption devices (3) by multicast,
- buffering (S4) a portion of the media stream and the marking data and, in response to a request from another content consumption device (3), sending (S5) the buffered portion to said other content consumption device (3) in unicast, to enable said other content consumption device (3) to reduce buffering by skipping frames during playback based on the marking data.

2. Method according to claim 1, comprising determining a marked media stream (V₁) by combining the obtained media stream (V₀) and the marking data,
wherein sending (S3) said media stream and said marking data to a plurality of content consumption devices (3) by multicast comprises sending said marked media stream (V₁),
wherein buffering (S4) a portion of the media stream and the marking data comprises buffering a portion of said marked media stream (V₁), and
wherein sending (S5) the buffered portion comprises sending the buffered portion of the marked media stream.

3. Content transmission device (2) comprising means (9, 10, P) configured for:
- obtaining (S1) a media stream (V₀) comprising a plurality of successive frames, **characterized in that** said means are further configured for:
- selecting (S2) one or more of said frames which meet a selection criterion, wherein the media stream comprises successive video frames, the means are further configured for performing at least one of:
- selecting a video frame having a luminance below a luminance threshold,
- selecting a video frame of a still scene,
- selecting a video frame of a changing scene,
- selecting a video frame of a scene change, and/or
wherein the media stream comprises successive audio frames, the means are further configured for performing selecting an audio frame having a sound level below a sound level threshold,
- determining (S2) marking data specifying the selected frames,
- sending (S3) said media stream and said marking data to a plurality of content consumption devices (3) by multicast,
- buffering (S4) a portion of the media stream and the marking data and, in response to a request from another content consumption device (3), sending (S5) the buffered portion to said other content consumption device (3) in unicast, to enable said other content consumption device (3) to reduce buffering by skipping frames during playback, based on the marking data.

4. Method for consumption of media content, executed by a content consumption device (3), comprising:
- sending (T2) a request for a media stream to a content transmission device (2),
**characterized by** comprising:
- in response to said request, receiving, from the content transmission device (2), in unicast, a portion of said media stream and marking data specifying selected frames of said media stream, wherein the media stream comprises successive video frames and the selected frames have been selected based on at least one of:
- selecting a video frame having a luminance below a luminance threshold.
- selecting a video frame of a still scene,
- selecting a video frame of a changing scene,
- selecting a video frame of a scene change, and/or
wherein the media stream comprises successive audio frames and the selected frames have been selected based on selecting an audio frame having a sound level below a sound level threshold,
- buffering the received portion of the media stream and marking data in a receiving buffer,
- during play back (T3) of the media stream from said receiving buffer, skipping frames specified by the marking data.

5. Method according to claim 4, comprising:
- in response to said request, receiving said media stream in multicast.

6. Content consumption device (3) comprising means configured for performing:
- sending (T2) a request for a media stream to a content transmission device (2),
**characterized by** said means being further configured for:
- in response to said request, receiving, from the content transmission device (2), in unicast, a portion of said media stream and marking data specifying selected frames of said media stream, wherein the media stream comprises successive video frames and the selected frames have been selected based on at least one of:
- selecting a video frame having a luminance below a luminance threshold,
- selecting a video frame of a still scene,
- selecting a video frame of a changing scene,
- selecting a video frame of a scene change, and/or
wherein the media stream comprises successive audio frames and the selected frames have been selected based on selecting an audio frame having a sound level below a sound level threshold,- buffering the received portion of the media stream and marking data in a receiving buffer,
- during play back (T3) of the media stream from said receiving buffer, skipping frames specified by the marking data.

7. Content consumption device (3) according to claim 6, wherein said means are further configured for, in response to said request, receiving said media stream in multicast.

8. Computer program (P) comprising instructions for performing the method of one of claims 1 to 2 and 4 to 5 when said instructions are executed by a computer.

9. System comprising a content transmission device (2) according to claim 3 and one or more content consumption devices (3) according to claim 6.

## Patentansprüche

1. Verfahren zur Übertragung eines Medieninhalts, das von einer Inhaltsübertragungsvorrichtung (2) ausgeführt wird und Folgendes umfasst:
- Erhalten (S1) eines Medienstroms (V₀), der eine Vielzahl von aufeinanderfolgenden Frames umfasst, **gekennzeichnet durch**:
- Auswählen (S2) von einem oder mehreren der Frames, die ein Auswahlkriterium erfüllen,
wobei der Medienstrom aufeinanderfolgende Videoframes umfasst, wobei das Verfahren mindestens eines von Folgendem umfasst:
- Auswählen eines Videoframes mit einer Luminanz unter einem Luminanzschwellwert,
- Auswählen eines Videoframes einer Standszene,
- Auswählen eines Videoframes einer sich ändernden Szene,
- Auswählen eines Videoframes eines Szenenwechsels und/oder
wobei der Medienstrom aufeinanderfolgende Audioframes umfasst, wobei das Verfahren das Auswählen eines Audioframes mit einem Lautstärkepegel unter einem Lautstärkepegelschwellwert umfasst,
- Bestimmen (S2) von Markierungsdaten, die die ausgewählten Frames spezifizieren,
- Senden (S3) des Medienstroms und der Markierungsdaten mittels Multicast an eine Vielzahl von Inhaltsverbrauchsvorrichtungen (3),
- Puffern (S4) eines Abschnitts des Medienstroms und der Markierungsdaten und, in Reaktion auf eine Anforderung von einer anderen Inhaltsverbrauchsvorrichtung (3), Senden (S5) des gepufferten Abschnitts mittels Unicast an die andere Inhaltsverbrauchsvorrichtung (3), um es der anderen Inhaltsverbrauchsvorrichtung (3) zu ermöglichen, durch Überspringen von Frames während der Wiedergabe auf Basis der Markierungsdaten eine Pufferung zu reduzieren.

2. Verfahren nach Anspruch 1, das das Bestimmen eines markierten Medienstroms (V₁) durch Kombinieren des erhaltenen Medienstroms (V₀) und der Markierungsdaten umfasst,
wobei das Senden (S3) des Medienstroms und der Markierungsdaten mittels Multicast an eine Vielzahl von Inhaltsverbrauchsvorrichtungen (3) das Senden des markierten Medienstroms (V₁) umfasst,
wobei das Puffern (S4) eines Abschnitts des Medienstroms und der Markierungsdaten das Puffern eines Abschnitts des markierten Medienstroms (V₁) umfasst, und
wobei das Senden (S5) des gepufferten Abschnitts das Senden des gepufferten Abschnitts des markierten Medienstroms umfasst.

3. Inhaltsübertragungsvorrichtung (2), die Mittel (9, 10, P) umfasst, die zu Folgendem ausgelegt sind:
- Erhalten (S1) eines Medienstroms (V₀), der eine Vielzahl von aufeinanderfolgenden Frames umfasst, **dadurch gekennzeichnet, dass** die Mittel ferner zu Folgendem ausgelegt sind:
- Auswählen (S2) von einem oder mehreren der Frames, die ein Auswahlkriterium erfüllen,
wobei der Medienstrom aufeinanderfolgende Videoframes umfasst, wobei die Mittel ferner dazu ausgelegt sind, mindestens eines von Folgendem durchzuführen:
- Auswählen eines Videoframes mit einer Luminanz unter einem Luminanzschwellwert,
- Auswählen eines Videoframes einer Standszene,
- Auswählen eines Videoframes einer sich ändernden Szene,
- Auswählen eines Videoframes eines Szenenwechsels und/oder
wobei der Medienstrom aufeinanderfolgende Audioframes umfasst, wobei die Mittel ferner dazu ausgelegt sind, das Auswählen eines Audioframes mit einem Lautstärkepegel unter einem Lautstärkepegelschwellwert durchzuführen,
- Bestimmen (S2) von Markierungsdaten, die die ausgewählten Frames spezifizieren,
- Senden (S3) des Medienstroms und der Markierungsdaten mittels Multicast an eine Vielzahl von Inhaltsverbrauchsvorrichtungen (3),
- Puffern (S4) eines Abschnitts des Medienstroms und der Markierungsdaten und, in Reaktion auf eine Anforderung von einer anderen Inhaltsverbrauchsvorrichtung (3), Senden (S5) des gepufferten Abschnitts mittels Unicast an die andere Inhaltsverbrauchsvorrichtung (3), um es der anderen Inhaltsverbrauchsvorrichtung (3) zu ermöglichen, durch Überspringen von Frames während der Wiedergabe auf Basis der Markierungsdaten eine Pufferung zu reduzieren.

4. Verfahren zum Verbrauch eines Medieninhalts, das von einer Inhaltsverbrauchsvorrichtung (3) ausgeführt wird und Folgendes umfasst:
- Senden (T2) einer Anforderung eines Medienstroms an eine Inhaltsübertragungsvorrichtung (2), **dadurch gekennzeichnet, dass** es Folgendes umfasst:
- in Reaktion auf die Anforderung Empfangen eines Abschnitts des Medienstroms und von Markierungsdaten, die ausgewählte Frames des Medienstroms spezifizieren mittels Unicast von der Inhaltsübertragungsvorrichtung (2), wobei der Medienstrom aufeinanderfolgende Videoframes umfasst und die ausgewählten Frames auf Basis von mindestens einem von Folgendem ausgewählt wurden:
- Auswählen eines Videoframes mit einer Luminanz unter einem Luminanzschwellwert,
- Auswählen eines Videoframes einer Standszene,
- Auswählen eines Videoframes einer sich ändernden Szene,
- Auswählen eines Videoframes eines Szenenwechsels und/oder
wobei der Medienstrom aufeinanderfolgende Audioframes umfasst und die ausgewählten Frames auf Basis des Auswählens eines Audioframes mit einem Lautstärkepegel unter einem Lautstärkepegelschwellwert ausgewählt wurden,
- Puffern des empfangenen Abschnitts des Medienstroms und der Markierungsdaten in einem Empfangspuffer,
- während der Wiedergabe (T3) des Medienstroms aus dem Empfangspuffer Überspringen von Frames, die durch die Markierungsdaten spezifiziert sind.

5. Verfahren nach Anspruch 4, das Folgendes umfasst:
- in Reaktion auf die Anforderung Empfangen des Medienstroms mittels Multicast.

6. Inhaltsverbrauchsvorrichtung (3), die Mittel umfasst, die zum Durchführen von Folgendem ausgelegt sind:
- Senden (T2) einer Anforderung eines Medienstroms an eine Inhaltsübertragungsvorrichtung (2),
**dadurch gekennzeichnet, dass** die Mittel ferner zu Folgendem ausgelegt sind:
- in Reaktion auf die Anforderung Empfangen eines Abschnitts des Medienstroms und von Markierungsdaten, die ausgewählte Frames des Medienstroms spezifizieren mittels Unicast von der Inhaltsübertragungsvorrichtung (2), wobei der Medienstrom aufeinanderfolgende Videoframes umfasst und die ausgewählten Frames auf Basis von mindestens einem von Folgendem ausgewählt wurden:
- Auswählen eines Videoframes mit einer Luminanz unter einem Luminanzschwellwert,
- Auswählen eines Videoframes einer Standszene,
- Auswählen eines Videoframes einer sich ändernden Szene,
- Auswählen eines Videoframes eines Szenenwechsels und/oder
wobei der Medienstrom aufeinanderfolgende Audioframes umfasst und die ausgewählten Frames auf Basis des Auswählens eines Audioframes mit einem Lautstärkepegel unter einem Lautstärkepegelschwellwert ausgewählt wurden,
- Puffern des empfangenen Abschnitts des Medienstroms und der Markierungsdaten in einem Empfangspuffer,
- während der Wiedergabe (T3) des Medienstroms aus dem Empfangspuffer Überspringen von Frames, die durch die Markierungsdaten spezifiziert sind.

7. Inhaltsverbrauchsvorrichtung (3) nach Anspruch 6, wobei die Mittel ferner dazu ausgelegt sind, in Reaktion auf die Anforderung den Medienstrom mittels Multicast zu empfangen.

8. Computerprogramm (P), das Anweisungen zum Durchführen des Verfahrens nach einem der Ansprüche 1 bis 2 und 4 bis 5, wenn die Anweisungen von einem Computer ausgeführt werden, umfasst.

9. System, das eine Inhaltsübertragungsvorrichtung (2) nach Anspruch 3 und eine oder mehrere Inhaltsverbrauchsvorrichtungen (3) nach Anspruch 6 umfasst.

## Revendications

1. Procédé de transmission de contenu multimédia, exécuté par un dispositif de transmission de contenu (2), comprenant :
- l'obtention (S1) d'un flux multimédia (V₀) comprenant une pluralité de trames successives, **caractérisé par** :
- la sélection (S2) d'une ou plusieurs desdites trames qui répondent à un critère de sélection,
dans lequel le flux multimédia comprend des trames vidéo successives, le procédé comprenant au moins l'une parmi :
- la sélection d'une trame vidéo ayant une luminance en dessous d'un seuil de luminance,
- la sélection d'une trame vidéo d'une scène fixe,
- la sélection d'une trame vidéo d'une scène changeante,
- la sélection d'une trame vidéo d'un changement de scène, et/ou
dans lequel le flux multimédia comprend des trames audio successives, le procédé comprenant la sélection d'une trame audio ayant un niveau sonore en dessous d'un seuil de niveau sonore,
- la détermination (S2) de données de marquage spécifiant les trames sélectionnées,
- l'envoi (S3) dudit flux multimédia et desdites données de marquage à une pluralité de dispositifs de consommation de contenu (3) par multidiffusion,
- la mise en mémoire tampon (S4) d'une partie du flux multimédia et des données de marquage et, en réponse à une demande en provenance d'un autre dispositif de consommation de contenu (3), l'envoi (S5) de la partie mise en mémoire tampon audit autre dispositif de consommation de contenu (3) en unidiffusion, pour permettre audit autre dispositif de consommation de contenu (3) de réduire la mise en mémoire tampon en sautant des trames pendant la lecture sur la base des données de marquage.

2. Procédé selon la revendication 1, comprenant la détermination d'un flux multimédia marqué (V₁) en combinant le flux multimédia (V₀) obtenu et les données de marquage,
dans lequel l'envoi (S3) dudit flux multimédia et desdites données de marquage à une pluralité de dispositifs de consommation de contenu (3) par multidiffusion comprend l'envoi dudit flux multimédia marqué (V₁),
dans lequel la mise en mémoire tampon (S4) d'une partie du flux multimédia et des données de marquage comprend la mise en mémoire tampon d'une partie dudit flux multimédia marqué (V₁), et
dans lequel l'envoi (S5) de la partie mise en mémoire tampon du flux comprend l'envoi de la partie mise en mémoire tampon du flux multimédia marqué.

3. Dispositif de transmission de contenu (2) comprenant des moyens (9, 10, P) configurés pour :
- obtenir (S1) un flux multimédia (V₀) comprenant une pluralité de trames successives, **caractérisé en ce que** lesdits moyens sont en outre configurés pour :
- sélectionner (S2) une ou plusieurs desdites trames qui répondent à un critère de sélection, dans lequel le flux multimédia comprend des trames vidéo successives, les moyens sont en outre configurés pour réaliser au moins l'une parmi :
- la sélection d'une trame vidéo ayant une luminance en dessous d'un seuil de luminance,
- la sélection d'une trame vidéo d'une scène fixe,
- la sélection d'une trame vidéo d'une scène changeante,
- la sélection d'une trame vidéo d'un changement de scène, et/ou
dans lequel le flux multimédia comprend des trames audio successives, les moyens sont en outre configurés pour réaliser la sélection d'une trame audio ayant un niveau sonore en dessous d'un seuil de niveau sonore,
- déterminer (S2) des données de marquage spécifiant les trames sélectionnées,
- envoyer (S3) ledit flux multimédia et lesdites données de marquage à une pluralité de dispositifs de consommation de contenu (3) par multidiffusion,
- mettre en mémoire tampon (S4) une partie du flux multimédia et les données de marquage et, en réponse à une demande en provenance d'un autre dispositif de consommation de contenu (3), envoyer (S5) la partie mise en mémoire tampon audit autre dispositif de consommation de contenu (3) en unidiffusion, pour permettre audit autre dispositif de consommation de contenu (3) de réduire la mise en mémoire tampon en sautant des trames pendant la lecture, sur la base des données de marquage.

4. Procédé de consommation de contenu multimédia, exécuté par un dispositif de consommation de contenu (3), comprenant :
- l'envoi (T2) d'une demande d'un flux multimédia à un dispositif de transmission de contenu (2),
**caractérisé en ce qu'**il comprend :
- en réponse à ladite demande, la réception, à partir du dispositif de transmission de contenu (2), en unidiffusion, d'une partie dudit flux multimédia et de données de marquage spécifiant des trames sélectionnées dudit flux multimédia, dans lequel le flux multimédia comprend des trames vidéo successives et les trames sélectionnées ont été sélectionnées sur la base d'au moins l'une parmi :
- la sélection d'une trame vidéo ayant une luminance en dessous d'un seuil de luminance,
- la sélection d'une trame vidéo d'une scène fixe,
- la sélection d'une trame vidéo d'une scène changeante,
- la sélection d'une trame vidéo d'un changement de scène, et/ou
dans lequel le flux multimédia comprend des trames audio successives et les trames sélectionnées ont été sélectionnées sur la base de la sélection d'une trame audio ayant un niveau sonore en dessous d'un seuil de niveau sonore,
- la mise en mémoire tampon de la partie reçue du flux multimédia et des données de marquage dans une mémoire tampon de réception,
- pendant la lecture (T3) du flux multimédia à partir de ladite mémoire tampon de réception, le saut de frames spécifiées par les données de marquage.

5. Procédé selon la revendication 4, comprenant :
- en réponse à ladite demande, la réception dudit flux multimédia en multidiffusion.

6. Dispositif de consommation de contenu (3) comprenant des moyens configurés pour réaliser :
- l'envoi (T2) d'une demande d'un flux multimédia à un dispositif de transmission de contenu (2),
**caractérisé en ce que** lesdits moyens sont en outre configurés pour :
- en réponse à ladite demande, recevoir, à partir du dispositif de transmission de contenu (2), en unidiffusion, une partie dudit flux multimédia et des données de marquage spécifiant des trames sélectionnées dudit flux multimédia, dans lequel le flux multimédia comprend des trames vidéo successives et les trames sélectionnées ont été sélectionnées sur la base d'au moins l'une parmi :
- la sélection d'une trame vidéo ayant une luminance en dessous d'un seuil de luminance,
- la sélection d'une trame vidéo d'une scène fixe,
- la sélection d'une trame vidéo d'une scène changeante,
- la sélection d'une trame vidéo d'un changement de scène, et/ou
dans lequel le flux multimédia comprend des trames audio successives et les trames sélectionnées ont été sélectionnées sur la base de la sélection d'une trame audio ayant un niveau sonore en dessous d'un seuil de niveau sonore,
- mettre en mémoire tampon la partie reçue du flux multimédia et des données de marquage dans une mémoire tampon de réception,
- pendant la lecture (T3) du flux multimédia à partir de ladite mémoire tampon de réception, sauter des trames spécifiées par les données de marquage.

7. Dispositif de consommation de contenu (3) selon la revendication 6, dans lequel lesdits moyens sont en outre configurés pour, en réponse à ladite demande, recevoir ledit flux multimédia en multidiffusion.

8. Programme informatique (P) comprenant des instructions pour réaliser le procédé de l'une des revendications 1 et 2 et 4 et 5 lorsque lesdites instructions sont exécutées par un ordinateur.

9. Système comprenant un dispositif de transmission de contenu (2) selon la revendication 3 et un ou plusieurs dispositifs de consommation de contenu (3) selon la revendication 6.
